# EUROPÄISCHE PATENTSCHRIFT

(11) **EP 1 981 619 B1**
(45) Veröffentlichungstag und Bekanntmachung des Hinweises auf die Patenterteilung: **18.08.2010**
(21) Anmeldenummer: 07712101.0
(22) Anmeldetag: 25.01.2007
(51) Int. Cl.: B01D 53/68, B01D 53/70, B01D 53/75, C01B 7/07

(54) **VERFAHREN ZUR GEWINNUNG VON (CHLOR)KOHLENWASSERSTOFFFREIEM CHLORWASSERSTOFF UND PHOSGENFREIEN (CHLOR)KOHLENWASSERSTOFFEN AUS EINEM (CHLOR)KOHLENWASSERSTOFFE UND PHOSGEN ENTHALTENDEN CHLORWASSERSTOFFSTROM**
PROCESS FOR EXTRACTING (CHLORINATED) HYDROCARBON-FREE HYDROGEN CHLORIDE AND PHOSGENE-FREE (CHLORINATED) HYDROCARBONS FROM A HYDROGEN CHLORIDE STREAM CONTAINING (CHLORINATED) HYDROCARBONS AND PHOSGENE
PROCÉDÉ POUR OBTENIR DU CHLORURE D'HYDROGÈNE EXEMPT D'HYDROCARBURES (CHLORÉS) ET DES HYDROCARBURES (CHLORÉS) EXEMPTS DE PHOSGÈNE À PARTIR D'UN FLUX DE CHLORURE D'HYDROGÈNE CONTENANT DES HYDROCARBURES (CHLORÉS) ET DU PHOSGÈNE

(30) Priorität: 27.01.2006 EP 06100960
(43) Veröffentlichungstag der Anmeldung: 22.10.2008
(73) Patentinhaber: BASF SE, 67056 Ludwigshafen (DE)
(72) Erfinder: SESING, Martin, 67165 Waldsee (DE); SCHELLING, Heiner, 67281 Kirchheim (DE); CIPRIAN, Jürgen, 67071 Ludwigshafen (DE); DEBERDT, Filip, 2812 Muizen (BE); KARCHES, Martin, 67434 Neustadt (DE); SCHUBERT, Olga, 67063 Ludwigshafen (DE)
(86) Internationale Anmeldenummer: PCT/EP2007/050716
(87) Internationale Veröffentlichungsnummer: WO 2007/085627

(56) Entgegenhaltungen:
- WO-A-94/16988
- DE-A1- 10 234 908
- GB-A- 196 258
- CHEMICAL ABSTRACTS + INDEXES, AMERICAN CHEMICAL SOCIETY. COLUMBUS, US, 23. März 1992 (1992-03-23), XP000255954 ISSN: 0009-2258

## Beschreibung

Die Erfindung betrifft ein Verfahren zur Gewinnung von (chlor)kohlenwasserstofffreiem Chlorwasserstoff und phosgenfreien (Chlor)kohlenwasserstoffen aus einem die (Chlor)kohlenwasserstoffe und Phosgen enthaltenden Chlorwasserstoffstrom.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der Isocyanat-Herstellung, als Koppelprodukt an. Der bei der Isocyanatherstellung gebildete Chlorwasserstoff wird überwiegend in der Oxichlorierung von Ethylen zu 1,2-Dichlorethan eingesetzt, das zu Vinylchlorid und schließlich zu PVC weiterverarbeitet wird.

Der in die katalytische Chlorwasserstoff-Oxidation eingespeiste, Chlorwasserstoff enthaltende Einspeisungsgasstrom ist üblicherweise ein chlorwasserstoffhaltiger Strom, der bei einem Verfahren als Abstrom anfällt, in dem Chlorwasserstoff als Koppelprodukt gebildet wird. Solche Verfahren sind beispielsweise
(1) die Isocyanat-Herstellung aus Phosgen und Aminen,
(2) die Säurechlorid-Herstellung,
(3) die Polycarbonat-Herstellung,
(4) die Herstellung von Vinylchlorid aus Ethylendichlorid,
(5) die Chlorierung von Aromaten.

Der Chlorwasserstoff enthaltende Einspeisungsgasstrom enthält im Allgemeinen Nebenbestandteile. Üblicherweise enthält er in Wasser nicht lösliche Verunreinigungen, die sowohl organischer als auch anorganischer Natur sein können. Organische Verunreinigungen sind beispielsweise Kohlenwasserstoffe oder Chlorkohlenwasserstoffe.

Typische Kohlenwasserstoffe, die in den Chlorwasserstoff enthaltenden Einsatzgasströmen enthalten sein können, umfassen Aromaten wie Benzol, Toluol, Xylole und C₆-C₁₂-Aliphaten. Typische Chlorkohlenwasserstoffe umfassen Monochlorbenzol, Dichlorbenzol, Tetrachlorkohlenstoff, Vinylchlorid und Dichlorethan. Die Kohlenwasserstoffe und Chlorkohlenwasserstoffe können in Mengen bis zu 20 Vol.-%, im Allgemeinen bis 30 000 ppm, bevorzugt in Mengen bis 10 000 ppm und insbesondere in Mengen von 100 bis 3000 ppm enthalten sein. Als anorganischer Nebenbestandteil kann in den Chlorwasserstoff enthaltenden Einsatzgasströmen, die aus den Prozessen (1), (2) und (3) stammen, insbesondere Phosgen enthalten sein.

Im Allgemeinen wird der chlorwasserstoffhaltige Einspeisungsstrom vor der Einleitung in die Chlorwasserstoff-Oxidation durch Überleiten über ein Reinigungsbett und Adsorption von darin enthaltenen Kohlenwasserstoffen an dem Reinigungsbett vorgereinigt. Das Reinigungsbett besteht dabei aus geeigneten Adsorbentien, vorzugsweise in stückiger Form, wie Kugeln, Extrudaten oder Tabletten. Geeignete Materialien, die als Adsorbentien in Frage kommen, sind beispielsweise Aktivkohle, Aluminiumoxid, Titanoxid, Siliziumdioxid, Eisenoxid, Zeolithe und Molsiebe. Geeignete Materialien können auch Metalloxide oder Metallhalogenide, wie Kupfer- oder Rutheniumoxide oder - halogenide bzw. deren Gemische, auf einem Träger aus einem feuerfesten anorganischen Material wie Aluminiumoxid, Titanoxid oder Siliziumdioxid enthalten. Bevorzugte Adsorbentien sind Aluminiumoxid, Aktivkohle, dotierte Aktivkohle und Tonerden.

DE-A 102 34 908 offenbart ein Verfahren zur Herstellung von Chlor aus einem Gasgemisch, welches Chlorwasserstoff und Kohlenwasserstoffe sowie Chlorkohlenwasserstoffe und gegebenenfalls weitere Verunreinigungen enthält. In einem ersten Schritt wird zumindest ein Teil der Kohlenwasserstoffe und/oder Chlorkohlenwasserstoffe aus dem Einspeisungsgasstrom durch Überleiten über ein Reinigungsbett und Absorption der organischen Chlorverbindungen an dem Reinigungsbett entfernt. Beschrieben wird eine Anordnung aus zwei parallelen Adsorbern, von denen abwechselnd einer regeneriert wird.

Chemical Abstracts XP 000255954, American Chemical Society, 23. März 1992 beschreibt die Reinigung von Chlorwasserstoff durch Adsorption von Chlorkohlenwasserstoff an Aktivkohle und die Regenerierung des Aktivkohlebetts. Es wird erwähnt, dass mindestens zwei Adsorptionskolonnen alternierend im Adsorptions- und Desorptionsmodus betrieben werden.

WO 94/16988 betrifft ein Reinigungsverfahren für Chlorwasserstoff, bei dem ein Fluorchlorkohlenwasserstoffe enthaltender Chlorwasserstoffstrom über ein Reinigungsbett aus Aktivkohle oder Molekularsieb geleitet wird. Im Einzelnen wird die Regenerierung des Reinigungsbetts durch Desorption der adsorbierten Fluorchlorkohlenwasserstoffe beschrieben. Erwähnt wird weiterhin, dass mehrere Betten in Serie oder parallel geschaltet betrieben werden können.

Nachteilig an den Verfahren des Standes der Technik ist, dass die aus den Chlorwasserstoff-Abströmen der oben genannten Prozessen (1), (2) und (3) stammenden, durch Adsorption wieder gewonnene (Chlor)kohlenwasserstoffe mit Phosgen kontaminiert sind.

Aufgabe der Erfindung ist es, ein Verfahren bereitzustellen, bei dem die in dem chlorwasserstoffhaltigen Einsatzgasstrom der Chlorwasserstoff-Oxidation neben Phosgen enthaltenden (Chlor)kohlenwasserstoffe aus dem Einsatzgasstrom entfernt und im Wesentlichen phosgenfrei wieder gewonnen werden.

Gelöst wird die Aufgabe durch ein Verfahren zur Gewinnung von (chlor)kohlenwasserstofffreiem Chlorwasserstoff und im Wesentlichen phosgenfreien (Chlor)kohlenwasserstoffen aus einem die (Chlor)kohlenwasserstoffe und Phosgen enthaltenden Chlorwasserstoffstrom, bei dem
i) in einem ersten Schritt ein erster Adsorber und ein zweiter Adsorber in Reihe geschaltet und der Phosgen und (Chlor)kohlenwasserstoffe enthaltende Frisch-Chlorwasserstoffstrom zuerst durch den ersten und anschließend durch den zweiten Adsorber geleitet wird, bis von dem ersten Adsorber im Wesentlichen kein (Chlor)kohlenwasserstoff mehr adsorbiert wird,
ii) in einem zweiten Schritt der Frisch-Chlorwasserstoffstrom durch den zweiten Adsorber geleitet wird, während der erste Adsorber regeneriert wird, wobei bei der Regenerierung im Wesentlichen phosgenfreier (Chlor)kohlenwasserstoff anfällt,
iii) in einem dritten Schritt der Frisch-Chlorwasserstoffstrom zuerst durch den zweiten und anschließend durch den regenerierten ersten Adsorber geleitet wird, bis durch den zweiten Adsorber im Wesentlichen kein (Chlor)kohlenwasserstoff mehr adsorbiert wird,
iv) in einem vierten Schritt der Frisch-Chlorwasserstoffstrom durch den ersten Adsorber geleitet wird, während der zweite Adsorber regeneriert wird, wobei bei der Regenerierung im Wesentlichen phosgenfreier (Chlor)kohlenwasserstoff anfällt,
wobei die Schritte i) bis iv) ein- oder mehrmals hintereinander ausgeführt werden können.

Die Erfindung macht sich die Tatsache zunutze, dass (Chlor)kohlenwasserstoffe von den gängigen Adsorbentien besser adsorbiert werden als Phosgen. So wird bei zunehmender Beladung des Adsorberbetts mit (Chlor)kohlenwasserstoffen bereits adsorbiertes Phosgen von dem Adsorberbett verdrängt. Das verdrängte Phosgen wird durch ein nachgeschaltetes Adsorberbett aufgefangen oder gelangt in den nachgeschalteten Prozess, beispielsweise die katalytische Chlorwasserstoff-Oxidation. Wird von dem Adsorber im Wesentlichen kein (Chlor)kohlenwasserstoff mehr adsorbiert, ist er vollständig mit (Chlor)kohlenwasserstoff beladen, und es befindet sich folglich kein Phosgen mehr auf dem Adsorberbett. Die vollständige Beladung des Adsorberbetts wird dabei mit geeigneten Messsonden bestimmt. Besonders bevorzugt sind dabei spektroskopische Methoden, wie z. B. die Infrarotspektrometrie oder die UV-Spektrometrie, oder chromatografische Methoden, wie z. B. die Gaschromatographie. Der adsorbierte (Chlor)kohlenwasserstoff kann anschließend durch Regeneration des Adsorberbetts wieder gewonnen werden und fällt dabei phosgenfrei an.

Bevorzugte Adorbentien, die in dem erfindungsgemäßen Verfahren eingesetzt werden, sind Aktivkohle, dotierte Aktivkohlen, Aluminiumoxide und Tonerden.

(Chlor)kohlenwasserstoffe, die in den erfindungsgemäß eingesetzten Chlorwasserstoffströmen enthalten sind und wieder gewonnen werden, sind bevorzugt Monochlorbenzol, Dichlorbenzol und Toluol.

Phosgen ist im Chlorwasserstoffstrom im Allgemeinen in Mengen von 5 - 20 000 ppm, bevorzugt 20 - 5000 ppm, besonders bevorzugt 50 - 2000 ppm enthalten.

In dem in den Regenerationsschritten (ii) und (iv) gewonnenen (Chlor)kohlenwasserstoffen ist Phosgen im Allgemeinen noch in Mengen von < 5000 ppm, bevorzugt < 1000 ppm enthalten.

Neben (Chlor)kohlenwasserstoffen und Phosgen kann der Frisch-Chlorwasserstoffstrom noch Kohlenmonoxid, Kohlendioxid, Inertgase, Kompressorenöle oder andere Schmierstoffe, wie sie z. B. für dynamische Dichtungen eingesetzt werden, enthalten.

In einer Ausführungsform des erfindungsgemäßen Verfahrens wird in den Regenerierschritten ii) und/oder iv) der in dem jeweiligen Adsorber enthaltene Chlorwasserstoff in einem geschlossenen Kreislauf, umfassend einen Verdichter, einen Erhitzer, einen Kondensator und einen Phasenabscheider, als Kreisgas über das Adsorberbett geleitet, wobei der Chlorwasserstoff-Kreisgasstrom vor Eintritt in das Adsorberbett erhitzt und nach Verlassen des Adsorberbetts gekühlt wird, wobei im Kondensator und Phasenabscheider flüssiger, im Wesentlichen phosgenfreier Chlorkohlenwasserstoff gewonnen wird.

Besonders bevorzugt ist es, den Regenerationsschritt ii) bzw. iv) in zwei Teilschritten durchzuführen, wobei in einem ersten Teilschritt iia) bzw. iva) der Chlorwasserstoff-Kreisgasstrom vor Eintritt in das Adsorberbett erhitzt und nach Verlassen des Adsorberbetts gekühlt wird und in einem zweiten Teilsschritt iib) bzw. ivb) der Chlorwasserstoff-Kreisgasstrom nur noch gekühlt wird. Der im Wesentlichen phosgenfreie (Chlor)kohlenwasserstoff fällt dabei im Kühler/Kondensator und Phasenabscheider an. Auf diese Weise wird das Adsorptionsbett abgekühlt, bevor der Adsorber wieder von Regenerationsbetrieb auf Adsorptionsbetrieb wechselt. Hierbei ist es bevorzugt, den Kreisgasstrom in, bezogen auf den Adsorptionsschritt i) beziehungsweise iii), gleicher Richtung über das Adsorptionsbett zu leiten.

Bevorzugt wird in den Regenerierschritten iia) und/oder iva) der Kreisgasstrom in, bezogen auf den Adsorptionsschritt i) bzw. iii), umgekehrter Richtung über das Adsorptionsbett geleitet.

Insbesondere bevorzugt ist es, zwischen den Schritten iia) und iib) bzw. iva) und ivb) die Richtung des Kreisgases wiederum umzukehren. Die Richtung des Gasstroms entspricht somit wieder der ursprünglichen Richtung des Gasstroms während des Adsorptionsbetriebs.

Die wiederholte Umkehrung der Gasrichtung ist aus folgendem Grund bevorzugt: Während des ersten Teilschritts durchströmt das Kreisgas den Adsorber in umgekehrter Richtung wie während des vorangegangenen Beladungsschritts. Damit wird verhindert, dass eventuell im Rohgas enthaltene stark adsorbierende Komponenten, wie z. B. Verdichteröle oder Schmierstoffe, während der Desorption vom Anfang des Adsorberbetts in das Bett hineingetragen werden. Die Umkehrung der Strömungsrichtung wirkt sozusagen als Rückspülung. Für den zweiten Teilschritt, die Kühlung des Betts, wird die Strömungsrichtung des Kreisgases umgedreht, sie ist die gleiche wie bei der aktiven Beladung des Betts durch das zu reinigende Rohgas. Auch im kalten Kreisgas ist entsprechend seinem Dampfdruck noch (Chlor)kohlenwasserstoff vorhanden. Dieser wird während der Abkühlphase vom Adsorbens adsorbiert. Durch die Umkehrung der Strömungsrichtung bei der Kühlung wird der (Chlor)kohlenwasserstoff am Eingang und nicht am Ausgang des Betts adsorbiert.

In einer weiteren Ausführungsform des erfindungsgemäßen Verfahrens wird der Regenerationsschritt ii) bzw. iv) nicht mit Kreisgas, sondern mit Frischgas durchgeführt. Hierzu wird in den Regenerierschritten ii) und/oder iv) ein Teilstrom oder auch der gesamte Frisch-Chlorwasserstoffstrom abgezweigt, erhitzt, durch das zu regenerierende Adsorberbett geleitet und anschließend durch einen Kondensator und einen Phasenabscheider geleitet, wobei flüssiger, im Wesentlichen phosgenfreier (Chlor)kohlenwasserstoff gewonnen wird, und anschließend dieser Teilstrom mit dem Hauptstrom des Frisch-Chlorwasserstoffs wieder vereinigt und durch den jeweils anderen, im Adsorptionsbetrieb befindlichen Adsorber geleitet.

Auch hierbei ist es bevorzugt, den Regenerierschritt ii) bzw. iv) in zwei Teilschritten durchzuführen, wobei in einem ersten Teilschritt iia) bzw. iva) der Teilstrom vor Eintritt in das Adsorberbett erhitzt und nach Verlassen des Adsorberbetts gekühlt wird und in einem zweiten Schritt iib) bzw. ivb) der Teilstrom nicht mehr erhitzt wird. Der im Wesentlichen phosgenfreie (Chlor)kohlenwasserstoff fällt dabei im Kühler/Kondensator und Phasenabscheider an. Auch hierbei ist es bevorzugt, die Gasrichtung zwischen den Schritten i) und iia) beziehungsweise iii) und iva) umzukehren und zwischen den Schritten iia) und iib) beziehungsweise iva) und ivb) erneut umzukehren.

Im Adsorptionsbetrieb werden die Adsorber im Allgemeinen bei einer Temperatur von 0 bis 60 °C, bevorzugt von 20 bis 40 °C betrieben. Der im Regenerierbetrieb über das Adsorptionsbett geleitete Chlorwasserstoff weist im Allgemeinen eine Temperatur von 100 bis 250 °C, bevorzugt von 120 bis 200 °C auf. Der Chlorwasserstoffstrom wird in dem Kühler/Kondensator im Allgemeinen auf eine Temperatur im Bereich von -25 bis 40 °C, bevorzugt 20 bis 40 °C abgekühlt.

Der von (Chlor)kohlenwasserstoffen befreite Chlorwasserstoffstrom kann in nachgeschalteten Prozessen, in denen Chlorwasserstoff als Edukt umgesetzt wird, als Einsatzgasstrom eingesetzt werden. Beispiele sind die katalytische Chlorwasserstoff-Oxidation oder die Oxychlorierung von Ethen zur Herstellung von Ethylendichlorid.

Bevorzugt wird der erfindungsgemäß erhaltene, von (Chlor)kohlenwasserstoffen befreite Chlorwasserstoffstrom zur Herstellung von Chlor durch katalytischen Chlorwasserstoff-Oxidation eingesetzt.

Gegenstand der Erfindung ist auch ein Verfahren zur Herstellung von Chlor aus Chlorwasserstoff, welcher (Chlor)kohlenwasserstoffe und Phosgen enthält, mit den Schritten:
a) Reinigung eines Chlorwasserstoff, (Chlor)kohlenwasserstoffe und Phosgen enthaltenden Stroms a nach dem erfindungsgemäßen Verfahren unter Gewinnung von phosgenfreien (Chlor)kohlenwasserstoffen und eines im Wesentlichen von (Chlor)kohlenwasserstoffen freien, Chlorwasserstoff enthaltenden Einsatzgasstroms b1;
b) Einspeisung des Chlorwasserstoff enthaltenden Stroms b1 und eines Sauerstoff enthaltenden Stroms b2 in eine Oxidationszone und katalytische Oxidation von Chlorwasserstoff zu Chlor, wobei ein Produktgasstrom b3 enthaltend Chlor, Wasser, Sauerstoff, Chlorwasserstoff, Kohlendioxid und Inertgase erhalten wird;
c) Inkontaktbringen des Produktgasstroms b3 in einem Phasenkontaktapparat mit wässriger Salzsäure I und teilweise Abtrennung von Wasser und von Chlorwasserstoff aus dem Strom b3, wobei ein Gasstrom c enthaltend Chlorwasserstoff, Chlor, Wasser, Sauerstoff, Kohlendioxid und gegebenenfalls Inertgase verbleibt, wobei mindestens 5 % des in dem Strom b3 enthaltenen Chlorwasserstoffs in dem Gasstrom c verbleibt;
d) Trocknung des Gasstroms c, wobei ein im Wesentlichen wasserfreier Gasstrom d enthaltend Chlorwasserstoff, Chlor, Sauerstoff, Kohlendioxid und gegebenenfalls Inertgase verbleibt;
e) teilweise Verflüssigung des Gasstroms d durch Verdichtung und Abkühlung, wobei ein zumindest teilweise verflüssigter Strom e erhalten wird;
f) Gas/Flüssig-Trennung des Stroms e in einen Gasstrom f1 enthaltend Chlor, Sauerstoff, Kohlendioxid und gegebenenfalls Inertgase und in einen Flüssigkeitsstrom f2 enthaltend Chlorwasserstoff, Chlor, Sauerstoff und Kohlendioxid und gegebenenfalls Rückführung zumindest eines Teils des Gasstroms f1 in Schritt b);
g) Trennung des Flüssigstroms f2 durch Destillation in einer Kolonne in einen Chlorstrom g1 und einen im Wesentlichen aus Chlorwasserstoff, Sauerstoff und Kohlendioxid bestehenden Strom g2, wobei ein Teil des Chlorwasserstoffs am Kolonnenkopf kondensiert und als Rücklauf in die Kolonne zurückläuft, wodurch ein Strom g2 mit einem Chlorgehalt < 1 Gew.-% gewonnen wird.

Eine bevorzugte Variante der nachgeschalteten Chlorwasserstoff-Oxidation wird nachstehend im Einzelnen beschrieben.

In dem Oxidationsschritt b) wird der Chlorwasserstoff enthaltende Strom b1 mit einem Sauerstoff enthaltenden Strom b2 in eine Oxidationszone eingespeist und katalytisch oxidiert.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Übliche Reaktionstemperaturen liegen zwischen 150 und 500 °C, übliche Reaktionsdrucke liegen zwischen 1 und 25 bar. Ferner ist es zweckmäßig, Sauerstoff in überstöchiometrischen Mengen einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Geeignete Katalysatoren enthalten beispielsweise Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium, enthalten. Geeignete Katalysatoren können ferner Chrom(III)oxid enthalten.

Geeignet sind ferner Katalysatoren, welche auf einem Träger 0,001 bis 30 Gew.-% Gold, 0 bis 3 Gew.-% eines oder mehrerer Erdalkalimetalle, 0 bis 3 Gew.-% eines oder mehrerer Alkalimetalle, 0 bis 10 Gew.-% eines oder mehrerer Seltenerdmetalle und 0 bis 10 Gew.-% eines oder mehrerer weiterer Metalle, ausgewählt aus der Gruppe bestehend aus Ruthenium, Palladium, Platin, Osmium, Iridium, Silber, Kupfer und Rhenium, jeweils bezogen auf das Gesamtgewicht des Katalysators, enthalten.

Derartige Gold enthaltende Trägerkatalysatoren weisen, insbesondere bei Temperaturen von ≤ 250 °C, bei der Chlorwasserstoff-Oxidation eine höhere Aktivität als die Ruthenium enthaltenden Katalysatoren des Standes der Technik auf.

Übliche Reaktionsapparate, in denen die katalytische Chlorwasserstoff-Oxidation durchgeführt wird, sind Festbett- oder Wirbelbettreaktoren. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich, als Fließ- oder Festbettverfahren durchgeführt werden. Bevorzugt wird sie in einem Wirbelschichtreaktor bei einer Temperatur von 320 bis 400 °C und einem Druck von 2 - 8 bar durchgeführt.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform besteht darin, dass man in dem Festbettreaktor eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialien eignen sich beispielsweise Siliciumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt gamma- oder alpha-Aluminiumoxid oder deren Gemische.

Die Kupfer- beziehungsweise die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei Temperaturen von 100 bis 500 °C, bevorzugt 100 bis 400 °C beispielsweise unter einer Stickstoff-, Argon- oder Luftatmosphäre getrocknet und gegebenenfalls calciniert werden. Bevorzugt werden die Formkörper zunächst bei 100 bis 200 °C getrocknet und anschließend bei 200 bis 400 °C calciniert. Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

In einem Schritt c) wird der Produktgasstrom b3 in einem Phasenkontaktapparat mit wässriger Salzsäure I in Kontakt gebracht und Wasser und Chlorwasserstoff teilweise aus dem Strom b3 abgetrennt, wobei ein Gasstrom c enthaltend Chlorwasserstoff, Chlor, Wasser, Sauerstoff, Kohlendioxid und gegebenenfalls Inertgase verbleibt. In diesem Schritt, der auch als Quench- und Absorptionsschritt bezeichnet werden kann, wird der Produktgasstrom b3 abgekühlt und werden Wasser und Chlorwasserstoff teilweise aus dem Produktgasstrom b3 als wässrige Salzsäure abgetrennt. Der heiße Produktgasstrom b3 wird durch Inkontaktbringen mit verdünnter Salzsäure I als Quenchmittel in einem geeigneten Phasenkontaktapparat, beispielsweise einer Packungs- oder Bodenkolonne, einem Strahlwäscher oder einem Sprühturm, abgekühlt, wobei ein Teil des Chlorwasserstoffs in dem Quenchmittel absorbiert wird. Quench- und Absorptionsmittel ist verdünnte Salzsäure, die nicht an Chlorwasserstoff gesättigt ist. Die Chlorwasserstoff-Konzentration der Salzsäure I und die Prozessbedingungen des Quench- und Absorptionsschrittes c) sind jedoch derart, dass Chlorwasserstoff nicht vollständig aus dem Produktgasstrom b3 abgetrennt wird, sondern zum Teil in dem den Phasenkontaktapparat verlassenden Gasstrom c verbleibt. Die Gegenwart von Chlorwasserstoff in dem Gasstrom c hat bei der nachgeschalteten Chlordestillation (Schritt g)) entscheidende Vorteile. Es verbleiben mindestens 5 %, im Allgemeinen 5 bis 80 %, bevorzugt 10 bis 60 % und besonders bevorzugt 15 bis 40 % des in dem Produktgasstrom b3 enthaltenen Chlorwasserstoffs in dem Gasstrom c.

Vorzugsweise weist die Salzsäure I eine Chlorwasserstoff-Konzentration von 27 bis 35 Gew.-% auf. Die Temperatur der Salzsäure I im Phasenkontaktapparat beträgt üblicherweise von 0 bis 150 °C, vorzugsweise von 30 bis 100 °C, der Druck in dem Phasenkontaktapparat beträgt üblicherweise von 0,5 bis 20 bar, vorzugsweise von 1 bis 10 bar. Der Produktgasstrom b3 kann vor Eintritt in den Phasenkontaktapparat abgekühlt werden, beispielsweise in einem Wärmetauscher.

In einer bevorzugten Ausführungsform des erfindungsgemäßen Verfahrens ist der Phasenkontaktapparat zweistufig ausgeführt, wobei die erste Stufe ein Pfeifenquenchapparat und die zweite Stufe ein Fallfilm-Wärmetauscher ist.

In einer speziellen Ausführungsform des erfindungsgemäßen Verfahrens weist der Phasenkontaktapparat folgende Ausgestaltung auf: Die erste von zwei Stufen ist als Pfeifenquench ausgeführt. Dieser besteht aus senkrecht stehenden Rohren, den so genannten Pfeifen, in die die Umlaufflüssigkeit, hier also die wässrige Salzsäure I, welche zwischen den Rohren steht, vom Gas in die Rohre mitgerissen wird. Dabei wird die kühlende Umlaufflüssigkeit im Bereich der Kronen der Quenchrohre in kleine Tröpfchen zerteilt. Durch die hohe Turbulenz und die große Austauschfläche zwischen Gas und Flüssigkeit wird ein sehr guter Wärme- und Stoffübergang erreicht. Umlaufflüssigkeit und Gas bewegen sich im Gleichstrom. Die zweite, nachgeschaltete Stufe ist ein Fallfilm-Wärmetauscher, der als Rohrbündelapparat ausgebildet ist. Durch die Rohre werden Reaktionsgas- und Umlaufflüssigkeit (Salzsäure) im Gleichstrom geführt. Gekühlt wird der Rohrbündelapparat mit Wasser. Am Boden des Apparats befindet sich ein kleiner Behälter, in dem sich Flüssigkeit und Gas trennen. Die Flüssigkeit wird dem Pfeifenquenchapparat (erste Stufe) als Umlaufflüssigkeit wieder zugeführt. Zusätzlich wird dem Pfeifenquench die in der anschließenden Salzsäure-Destillation gewonnene wässrige Salzsäure II zugeführt.

Bevor die umlaufende Salzsäure wieder auf den Pfeifenquench aufgegeben wird, kann sie in einem dem Pfeifenquench vorgeschalteten zusätzlichen Wärmetauscher abgekühlt werden. Durch die Temperaturerniedrigung der dem Pfeifenquench zugeführten Salzsäure kann - bei gleichbleibender Temperatur der aus dem Pfeifenquench ablaufenden Salzsäure - die Umlaufmenge reduziert werden. Würde dagegen auf den zusätzlichen Wärmetauscher verzichtet und stattdessen die Ablauftemperatur der Salzsäure im Fallfilmwärmetauscher zu stark herabgesetzt werden, könnte eine zu hohe Löslichkeit von Chlorwasserstoff in der wässrigen Salzsäure resultieren. Statt eines Fallfilmwärmetauschers kann auch ein Plattenwärmetauscher vorgesehen sein.

Im Allgemeinen wird der Phasenkontaktapparat mit umlaufender Salzsäure I betrieben. In einer bevorzugten Ausführungsform wird zumindest ein Teil der in dem Phasenkontaktapparat umlaufenden wässrigen Salzsäure, beispielsweise 1 bis 20 %, dem Phasenkontaktapparat entnommen und nachfolgend destilliert, wobei gasförmiger Chlorwasserstoff und eine an Chlorwasserstoff abgereicherte wässrige Salzsäure II gewonnen werden, und wobei der Chlorwasserstoff in Schritt b) zurückgeführt und zumindest ein Teil der wässrigen Salzsäure II in den Phasenkontaktapparat zurückgeführt wird.

Die Salzsäuredestillation kann mehrstufig durchgeführt werden. Beispielsweise kann zuerst eine Druckdestillation durchgeführt werden, wobei am Kolonnenkopf Chlorwasserstoff und am Sumpf azeotrop siedende, verdünnte Salzsäure mit einem Chlorwasserstoff-Gehalt im Bereich von beispielsweise 15 - 22 Gew.-% gewonnen wird. Der Sumpfabzugsstrom der Druckdestillationskolonne wird nachfolgend einer Vakuumdestillation unterworfen, wobei am Kolonnenkopf der Vakuumdestillationskolonne Wasser und am Kolonnensumpf eine höher konzentrierte azeotrop siedende Salzsäure mit einem Chlorwasserstoffgehalt von beispielsweise 20 - 28 Gew.-% gewonnen wird. Die bei Druck- und Vakuumdestillation erhaltene Salzsäure kann jeweils teilweise oder vollständig (als Salzsäure II) in den Phasenkontaktapparat zurückgeführt und mit der Umlaufflüssigkeit vereinigt werden.

In einer weiteren bevorzugten Ausführungsform wird die dem Phasenkontaktapparat entnommene wässrige Salzsäure I vor Durchführung der Salzsäure-Destillation im Wesentlichen chlorfrei gestrippt. Hierzu wird vorzugsweise zumindest ein Teil des Sauerstoff enthaltenden Stroms b2, der der Oxidationszone zugeführt wird, eingesetzt, wobei es sich hierbei um sauerstoffhaltiges Frischgas oder um Kreisgas (Gasstrom f2) handeln kann. Die Strippung kann in einer üblichen Strippkolonne durchgeführt werden. Dabei kann der Chlorgehalt der Salzsäure I auf < 100 ppm, vorzugsweise < 10 ppm abgereichert werden.

Ein Teil der im Wesentlichen chlorfrei gestrippten Salzsäure I kann vor Durchführung der Salzsäure-Destillation abgetrennt und mit einem Teil der in der Salzsäure-Destillation gewonnenen wässrigen Salzsäure 11, beispielsweise der Azeotropsäure aus der Druckdestillation, vereinigt werden. Auf diese Weise ist es möglich, eine chlorfreie, spezifikationsgerechte Salzsäure bestimmter Konzentration herzustellen.

Die Chlorfrei-Strippung der Salzsäure I hat den zusätzlichen Vorteil, dass ein gegebenenfalls vorhandener nachgeschalteter Wärmetauscher, in dem die Salzsäure vor der Destillation erwärmt wird, nicht aus einem teuren korrosionsbeständigen Werkstoff wie Tantal hergestellt werden muss, sondern aus einem preiswerten Werkstoff wie Graphit gefertigt werden kann.

Der den Phasenkontaktapparat verlassende Gasstrom c enthält Chlor, Chlorwasserstoff, Wasser, Sauerstoff, Kohlendioxid und im Allgemeinen auch Inertgase (hauptsächlich Stickstoff, falls als sauerstoffhaltiges Gas Luft eingesetzt wird). Dieser wird in einer sich anschließenden Trocknungsstufe d) durch Inkontaktbringen mit geeigneten Trocknungsmitteln von Feuchtigkeitsspuren befreit. Geeignete Trocknungsmittel sind beispielsweise konzentrierte Schwefelsäure, Molsiebe oder hygroskopische Adsorbentien. Es wird ein im Wesentlichen wasserfreier Gasstrom d enthaltend Chlor, Sauerstoff, Kohlendioxid und gegebenenfalls Inertgase erhalten.

Vor dem Trocknungsschritt d) wird der Gasstrom c im Allgemeinen abgekühlt. Die Anwesenheit von Chlorwasserstoff bewirkt, dass Chlor bei Temperaturen < 10°C nicht als Chlorhydrat auskristallisiert kann, da das in dem Gasstrom c enthaltene Wasser in Form von Salzsäure gebunden ist. Dadurch kann auf niedrigere Temperaturen von beispielsweise -20 bis 5 °C abgekühlt werden, als dies in Abwesenheit von Chlorwasserstoff in dem Strom c möglich wäre. Da die bei der Abkühlung auskondensierende Salzsäure nur einen geringen Wasserdampfdruck hat, weist der dem Trocknungsschritt d) zugeführte, gekühlte Strom c einen nur geringen Wassergehalt auf. Dies ist für den nachfolgenden Trocknungsschritt nicht unwesentlich, da hierdurch weniger Trocknungsmittel, beispielsweise konzentrierte Schwefelsäure, verbraucht wird.

In einem Schritt e) wird der Gasstrom d durch Verdichtung und Abkühlung zumindest teilweise verflüssigt. Im Allgemeinen wird der strom durch ein- oder mehrstufige Kompression auf einen Druck im Bereich von 5 bis 50 bar verdichtet und gleichzeitig durch ein- oder mehrstufige Abkühlung auf eine Temperatur im Bereich von 0 bis -70 °C abgekühlt.

In einer sich anschließenden Gas/Flüssig-Trennung f) wird der Strom e in einen Gasstrom f1 enthaltend Chlor, Sauerstoff, Kohlendioxid und gegebenenfalls Inertgase und in einen Flüssigstrom f2 enthaltend Chlor, Chlorwasserstoff, Sauerstoff und Kohlendioxid getrennt. Dieser Schritt wird auch als "Flash" bezeichnet. Die Phasentrennung kann durch Separieren lassen der Gasphase von der flüssigen Phase in einem einfachen Behälter durchgeführt werden. In einer bevorzugten Ausführungsform erfolgt die Gas/Flüssig-Trennung, indem der verdichtete Strom e auf eine Kolonne gegeben und im Gegenstrom zur aufsteigenden Gasphase geführt wird und die in der Kolonne ablaufende, chlorreiche Flüssigphase zum Teil wieder auf die Kolonne aufgegeben und so zum Teil im Kreis geführt wird. Vorzugsweise werden 0 bis 80 Gew.-% des am Kolonnensumpf entnommen chlorreichen Flüssigkeitsstroms im Kreis geführt, also vorzugsweise am Kolonnenkopf wieder aufgegeben. Dabei wird in dem aufsteigenden Gasstrom enthaltenes Kohlendioxid aus dem Gasstrom herausgelöst und kann später problemlos durch Destillation (zusammen mit verbliebenem Sauerstoff) von Chlor abgetrennt werden. Es resultiert ein kohlendioxidarmer Gasstrom f1, der zumindest teilweise in die Oxidationszone zurückgeführt werden kann. So kann der Teilstrom, der von dem in die Oxidationszone zurückgeführten Strom f1 als Purge-Gasstrom abgetrennt und aus dem Verfahren ausgeschleust wird, um eine Aufpegelung von Kohlendioxid zu verhindern, verhältnismäßig gering bleiben oder ganz entfallen, wodurch auch der Chlorverlust durch den Purge-Gasstrom begrenzt wird.

Der abgetrennte Gasstrom f1 enthält im Allgemeinen 1 bis 40 Gew.-% Chlor, 1 bis 40 Gew.-% Chlorwasserstoff, 1 bis 80 Gew.-% Sauerstoff, 1 bis 80 Gew.-% Stickstoff, 0 bis 30 Gew.-% Kohlendioxid sowie 0 bis 10 Gew.-% weitere Bestandteile wie beispielsweise Edelgase und Kohlenmonoxid.

Der Flüssigstrom f2 enthält im Allgemeinen 70 bis 98 Gew.-% Chlor, 1 bis 20 Gew.-% Chlorwasserstoff, 0 bis 5 Gew.-% Sauerstoff, 0 bis 30 Gew.-% Kohlendioxid sowie 0 bis 5 Gew.-% weitere Bestandteile wie beispielsweise Edelgase und Kohlenmonoxid.

In einem Schritt g) wird der Flüssigstrom f2 durch Destillation in einer Kolonne in einen Chlorstrom g1 und einen im Wesentlichen aus Chlorwasserstoff, Sauerstoff und Kohlendioxid bestehenden Strom g2 getrennt, wobei ein Teil des Chlorwasserstoffs am Kolonnenkopf kondensiert und als Rücklauf in die Kolonne zurückläuft, wodurch ein Strom g2 mit einem Chlorgehalt < 1 Gew.-% gewonnen wird.

Die Destillation wird im Allgemeinen in einer Destillationskolonne mit beispielsweise 5 bis 30 theoretischen Böden, bei einer Temperatur im Bereich von -50 °C bis +110 °C und bei einem Druck im Bereich von 4 bis 40 bar durchgeführt. Der so erhaltene Chlorstrom g1 weist im Allgemeinen einen Chlorgehalt von 95 bis 100 Gew.-%, vorzugsweise 98 bis 100 Gew.-%, besonders bevorzugt 99 bis 100 Gew.-% auf. Der im Wesentlichen aus Chlorwasserstoff, Sauerstoff und Kohlendioxid bestehende Strom g2 wird als Abgasstrom aus dem Verfahren ausgeschleust.

Der mit dem Chlor verflüssigte Chlorwasserstoff ermöglicht als Rücklauf vom Kopfkondensator eine nahezu vollständige Zurückhaltung des Chlors, welches somit nicht ins Abgas gelangt und als Wertprodukt verloren geht. Bedingt durch den Chlorwasserstoff-Rücklauf ist auch eine höhere Kopftemperatur der Chlordestillationskolonne.

In einer Ausführungsform des erfindungsgemäßen Verfahrens wird der Chlordestillationskolonne ein Chlorwasserstoffstrom als flüssiger Seitenabzug entnommen und in die Oxidationszone zurückgeführt. Dieser Strom kann nach Entspannung auf Reaktordruck in einem Wärmeverbundapparat als Kühlmittel dienen.

In einem optionalen Schritt h) wird der Gasstrom g2 in einem Phasenkontaktapparat mit wässriger Salzsäure, vorzugsweise der durch Druckdestillation oder Vakuumdestillation gewonnenen Salzsäure II, in Kontakt gebracht und Chlorwasserstoff aus dem Strom g2 abgetrennt, wobei ein Gasstrom h, der im Wesentlichen aus Sauerstoff und Kohlendioxid besteht und daneben noch geringe Mengen Chlorwasserstoff und Chlor enthält, verbleibt. Im Allgemeinen beträgt der Chlorwasserstoffgehalt des Stroms g noch 100 bis 10000 ppm, der Chlorgehalt noch 10 bis 100 ppm. Da der größte Teil der Inertgase einschließlich Sauerstoff bereits in dem Gas/Flüssig-Trennschritt f abgetrennt wurde, fällt in dem Absorptionsschritt h nur noch ein verhältnismäßig geringer Gasvolumenstrom an, so dass eine kleine Absorptionskolonne für die Chlorwasserstoff-Trennung ausreichend ist.

In einem weiteren optionalen Schritt i) wird der Gasstrom h mit einer Lösung enthaltend Natriumhydrogencarbonat und Natriumhydrogensulfit mit einem pH-Wert von 7 bis 9 in Kontakt gebracht, wobei Chor und Chlorwasserstoff aus dem Gasstrom h entfernt werden.

Der Abgasstrom h wird vorzugsweise in einer Waschkolonne mit einem Umpumpstrom enthaltend Natriumhydrogencarbonat und Natriumhydrogensulfit, welcher einen pH-Wert von ca. 7,0 bis 9,0 aufweist, in Kontakt gebracht. Der Umpumpstrom wird auf den Kopf einer Waschkolonne aufgegeben. Dabei laufen im Wesentlichen die nachstehenden (Gleichgewichts)reaktionen ab:

(1) CO₂ + H₂O + NaOH ⇄ NaHCO3 + H₂O

(2) Cl₂ + NaHCO₃ ⇄ NaCl + HOCl + CO₂

(3) HOCI + Na₂SO₃ ⇄ NaCl + NaHSO₄

Ein Teil des Sumpfabzugsstroms enthaltend NaCl, NaHSO₄/Na₂SO₄, NaHSO₃/Na₂SO₃ und NaHCO₃ wird ausgeschleust. Der Umpumpstrom wird durch alkalische wässrige Natriumsulfitlösung ergänzt. Da durch diese Verfahrensweise nur wenig Kohlendioxid gebunden wird, resultiert ein verhältnismäßig geringer NaOH-Verbrauch des Waschschritts i).

Die Erfindung wird nachstehend anhand der Zeichnungen näher erläutert.

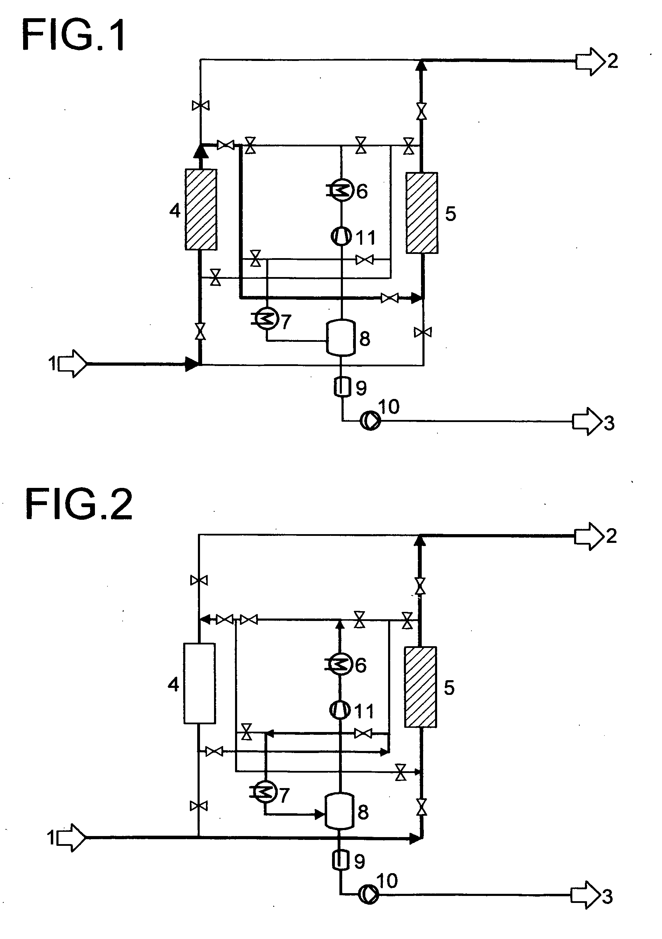

Die Figuren 1 bis 6 zeigen schematisch den Ablauf einer Ausführungsvariante des erfindungsgemäßen Adsorptions-/Regenerationszyklus', bei der die Regenerierung der Adsorber mit Kreisgas erfolgt. Die Anordnung gemäß der Figuren 1 bis 6 umfasst einen ersten Adsorber 4, einen zweiten Adsorber 5, einen Verdichter 11, einen Erhitzer 6, einen Kühler und Kondensator 7, einen Phasenabscheider 8, einen Vorlagebehälter 9, eine Pumpe 10, sowie Leitungen, welche durch Ventile zu öffnen und zu schließen sind, unter anderem eine Frisch-HCl-Zuleitung 1, eine HCl-Ableitung 2 sowie eine (Chlor)kohlenwasserstoff-Ableitung 3. Die im Adsorptionsbetrieb befindlichen Adsorber sind schraffiert, die im Regenerationsbetrieb befindlichen Adsorber ohne Füllmuster dargestellt.

Figur 1 illustriert den Schritt i) des erfindungsgemäßen Verfahrens. Der erste Adsorber 4 und der zweite Adsorber 5 sind in Reihe geschaltet und der Frisch-Chlorwasserstoff 1. passiert nacheinander beide Adsorber, bis der erste Adsorber 4 im Wesentlichen vollständig mit (Chlor)kohlenwasserstoff beladen und im Wesentlichen kein (Chlor)kohlenwasserstoff mehr adsorbiert wird und somit das gesamte Phosgen aus der ersten Adsorberstufe verdrängt und in dem zweiten Adsorber 5 vorliegt.

Figur 2 illustriert den Schritt iia) des erfindungsgemäßen Verfahrens mit Kreisgas-Regenerierung. Der Frisch-Chlorwasserstoff wird jetzt nur noch durch den zweiten Adsorber 5 geleitet, während der erste Adsorber 4 regeneriert wird. Der in dem ersten Adsorber 4 enthaltene Chlorwasserstoff wird mittels des Verdichters 11 durch den Erhitzer 6, den Adsorber 4 und anschließend durch den Kondensator 7 und den Phasenabscheider 8 geleitet. Dabei wird der (Chlor)kohlenwasserstoff von dem Adsorptionsbett durch den erhitzten Chlorwasserstoffstrom desorbiert und von diesem aufgenommen. In dem Kondensator 7 kondensiert flüssiger, im Wesentlichen phosgenfreier (Chlor)kohlenwasserstoff aus dem mit (Chlor)kohlenwasserstoff beladenen Chlorwasserstoffstrom aus und wird in dem Phasenabscheider 8 von dem Gasstrom getrennt und über den Vorlagebehälter 9 als Strom 10 ausgeschleust. Die Richtung des den Adsorber 4 passierenden Gasstroms ist gegenüber dem Adsorptionsschritt umgekehrt.

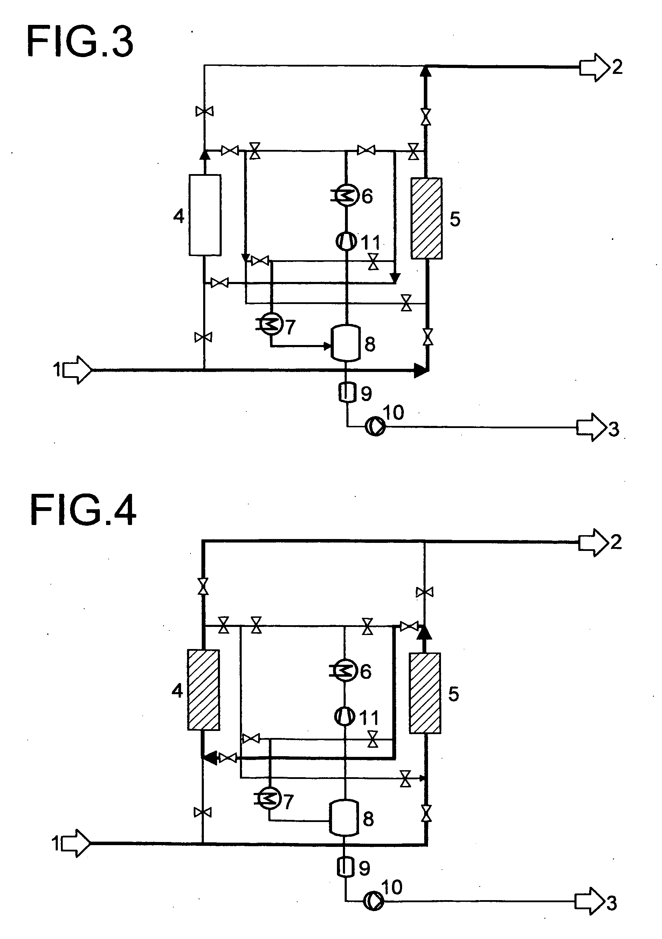

Figur 3 illustriert den Schritt iib) des erfindungsgemäßen Verfahrens mit Kreisgas-Regenerierung. Der Erhitzer 6 ist jetzt außer Betrieb, so dass der Kreisgasstrom nicht mehr erhitzt, sondern nur noch durch den Kühler/Kondensator 7 gekühlt wird. Die Gasrichtung durch den Adsorber 4 ist wiederum umgekehrt und entspricht nunmehr wieder der Gasrichtung im Adsorptionsbetrieb.

Figur 4 illustriert den Schritt iii) des erfindungsgemäßen Verfahrens. Schritt iii) entspricht Schritt i) (Figur 1), nur dass die Reihenfolge der Adsorber 4 und 5 gegenüber Schritt i) vertauscht ist. Adsorber 5 wird nun so lange beladen, bis im Wesentlichen kein (Chlor)kohlenwasserstoff mehr adsorbiert wird, und folglich die gesamte Phosgenmenge aus diesem Adsorber verdrängt ist. Die Phosgenmenge befindet sich nunmehr in dem nachgeschalteten Adsorber 4 oder ist, während sich der Adsorber 4 im Regenerierbetrieb (gemäß Figur 3) befand, zumindest teilweise von dem Adsorber 5 verdrängt worden und mit dem Strom 2 in den nachgeschalteten Chlorwasserstoff-Oxidationsprozess gelangt.

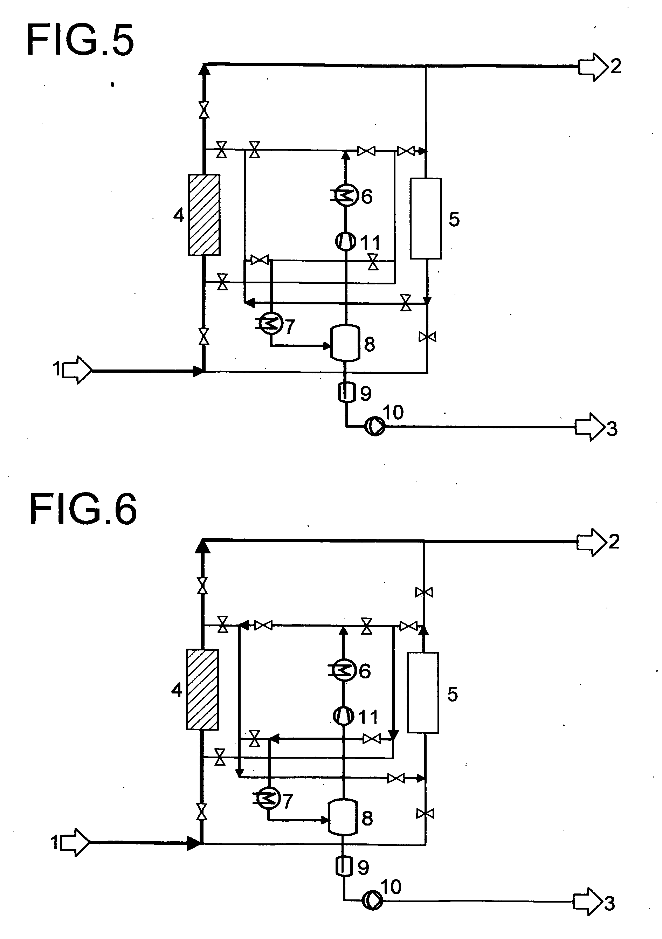

Figur 5 illustriert den Schritt iva) des erfindungsgemäßen Verfahrens mit Kreisgas-Regenerierung. Der Schritt iva) entspricht dem Schritt iia) (Figur 2), wobei sich nun der Adsorber 5 im Regenerierbetrieb befindet.

Figur 6 illustriert den Schritt ivb) des erfindungsgemäßen Verfahrens mit Kreisgas-Regenerierung. Der Schritt ivb) entspricht dem Schritt iib) (Figur 3), wobei sich der Adsorber 5 im Regenerierbetrieb befindet. Mit dem Schritt ivb) ist der Zyklus vollständig. Der nächste Schritt entspricht wieder dem Schritt i) (Figur 1).

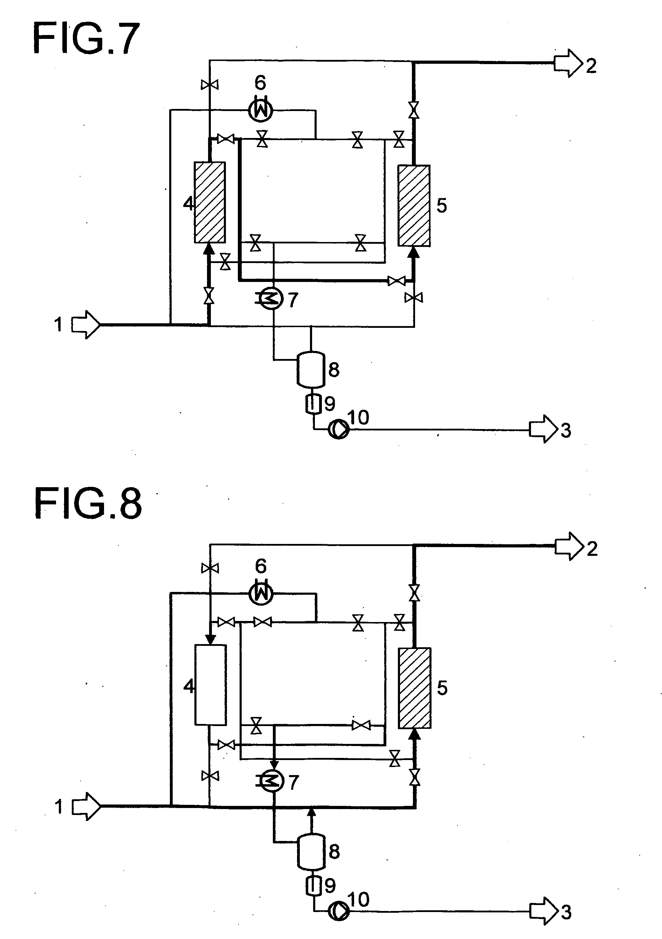

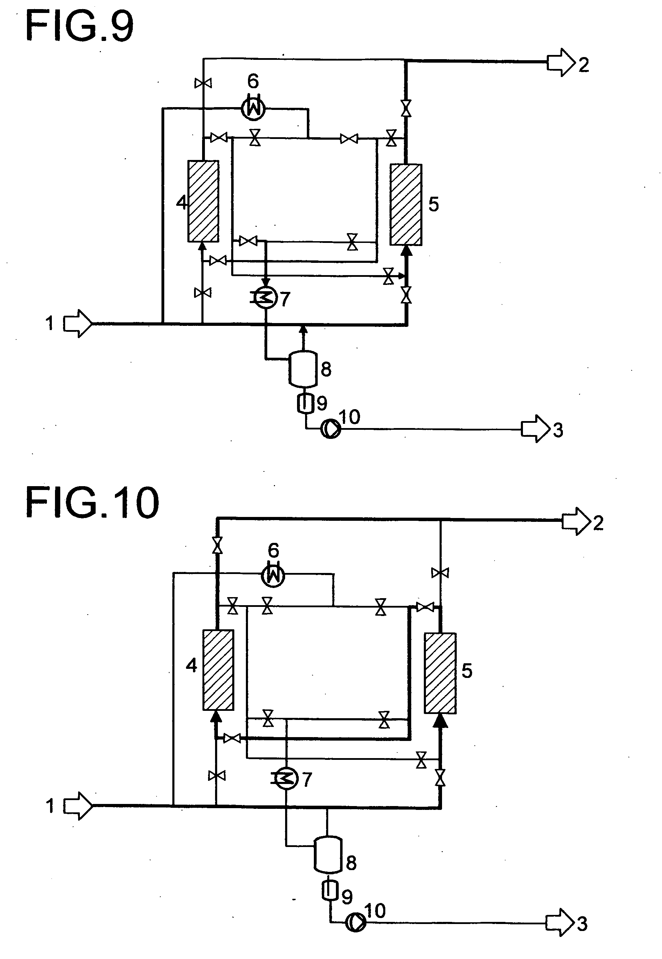

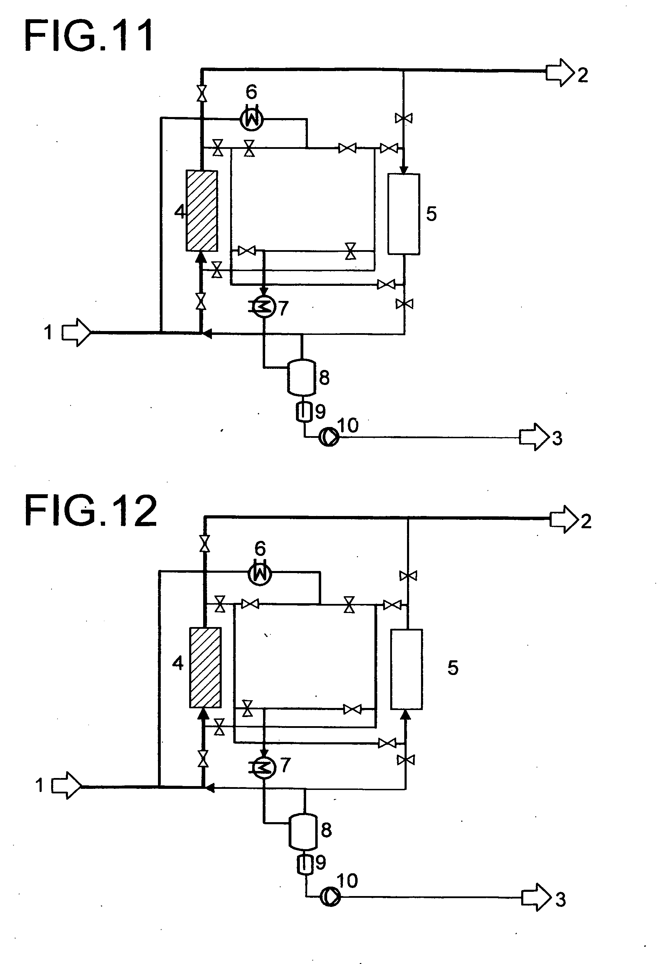

Die Figuren 7 bis 12 zeigen schematisch den Ablauf einer Ausführungsvariante des erfindungsgemäßen Adsorptions-/Regenerationszyklus', bei der die Regenerierung der Adsorber mit Chlorwasserstoff-Frischgas durchgeführt wird. Die Anordnung gemäß der Figuren umfasst den ersten Adsorber 4, den zweiten Adsorber 5, den Erhitzer 6, den Kühler und Kondensator 7, den Phasenabscheider 8, den Vorlagebehälter 9, die Pumpe 10 sowie Leitungen, welche durch Ventile zu öffnen und zu schließen sind, u. a. eine Frisch-HCl-Zuleitung 1, eine HCl-Ableitung 2 sowie eine (Chlor)kohlenwasserstoff-Ableitung 3. Es entfällt der Verdichter 11.

Figur 7 illustriert die Beladung der in Reihe geschalteten Adsorber 4 und 5, entsprechend Figur 1.

Figur 8 illustriert den Schritt iia) des erfindungsgemäßen Verfahrens mit Frischgas-Regenerierung. Der Frisch-Chlorwasserstoffstrom wird jetzt nur noch durch den zweiten Adsorber 5 geleitet, während der erste Adsorber 4 regeneriert wird. Hierzu wird ein Teilstrom dem Frisch-Chlorwasserstoffstrom 1 entnommen und durch den Erhitzer 6, den Adsorber 4, den Kondensator 7 und den Phasenabscheider 8 geleitet. Die Richtung des den Adsorber 4 passierenden Gases ist gegenüber dem Adsorptionsschritt umgekehrt. Der Teilstrom passiert den Phasenabscheider 8 und wird anschließend wieder mit dem Hauptstrom vereinigt.

Figur 9 illustriert den Schritt iib) des erfindungsgemäßen Verfahrens mit Frischgas-Regenerierung. Der Erhitzer 6 ist jetzt außer Betrieb, so dass der Kreisgasstrom nicht mehr erhitzt wird. Die Gasrichtung durch den Adsorber 4 ist wiederum umgekehrt und entspricht nunmehr der Gasrichtung im Adsorptionsbetrieb.

Figur 10 illustriert den Schritt iii) des erfindungsgemäßen Verfahrens und entspricht im Wesentlichen der Figur 4. Die Reihenfolge der Adsorber 4 und 5 ist nunmehr gegenüber Schritt i) vertauscht.

Figur 11 illustriert den Schritt iva) des erfindungsgemäßen Verfahrens mit Frischgas-Regenerierung. Der Schritt iva) entspricht dem Schritt iia) (Figur 8), wobei sich nun der Adsorber 5 im Regenerierbetrieb befindet.

Figur 12 illustriert den Schritt ivb) des erfindungsgemäßen Verfahrens mit Frischgas-Regenerierung. Der Schritt ivb) entspricht dem Schritt iib) (Figur 9), wobei sich der Adsorber 5 im Regenerierbetrieb befindet. Mit dem Schritt ivb) ist der Zyklus vollständig. Der nächste Schritt entspricht wieder dem Schritt i) (Figur 7).

## Patentansprüche

1. Verfahren zur Gewinnung von (chlor)kohlenwasserstofffreiem Chlorwasserstoff und phosgenfreien (Chlor)kohlenwasserstoffen aus einem (Chlor)kohlenwasserstoffe und Phosgen enthaltenden Chlorwasserstoffstrom, bei dem
i) in einem ersten Schritt ein erster Adsorber und ein zweiter Adsorber in Reihe geschaltet und der Phosgen und (Chlor)kohlenwasserstoffe enthaltende Frisch-Chlorwasserstoffstrom zuerst durch den ersten und anschließend durch den zweiten Adsorber geleitet wird, bis von dem ersten Adsorber im Wesentlichen kein (Chlor)kohlenwasserstoff mehr adsorbiert wird,
ii) in einem zweiten Schritt der Frisch-Chlorwasserstoffstrom durch den zweiten Adsorber geleitet wird, während der erste Adsorber regeneriert wird, wobei bei der Regenerierung im Wesentlichen phosgenfreier (Chlor)kohlenwasserstoff anfällt,
iii) in einem dritten Schritt der Frisch-Chlorwasserstoffstrom zuerst durch den zweiten und anschließend durch den regenerierten ersten Adsorber geleitet wird, bis durch den zweiten Adsorber im Wesentlichen kein (Chlor)kohlenwasserstoff mehr adsorbiert wird,
iv) in einem vierten Schritt der Frisch-Chlorwasserstoffstrom durch den ersten Adsorber geleitet wird, während der zweite Adsorber regeneriert wird, wobei bei der Regenerierung im Wesentlichen phosgenfreier (Chlor)kohlenwasserstoff anfällt,
wobei die Schritte i) bis iv) ein- oder mehrmals hintereinander ausgeführt werden können.

2. Verfahren nach Anspruch 1, **dadurch gekennzeichnet, dass** in den Regenerierschritten ii) und/oder iv) der in dem jeweiligen Adsorber enthaltene Chlorwasserstoff in einem geschlossenen Kreislauf, umfassend einen Verdichter, einen Erhitzer, einen Kondensator und einen Phasenabscheider, als Kreisgas über das Adsorberbett geleitet wird, wobei der Chlorwasserstoff-Kreisgasstrom vor Eintritt in das Adsorberbett erhitzt und nach Verlassen des Adsorberbetts gekühlt wird, wobei in Kondensator und Phasenabscheider flüssiger, im Wesentlichen phosgenfreier (Chlor)kohlenwasserstoff gewonnen wird.

3. Verfahren nach Anspruch 2, **dadurch gekennzeichnet, dass** in einem ersten Schritt iia) bzw. iva) der Chlorwasserstoff-Kreisgasstrom vor Eintritt in das Adsorberbett erhitzt und nach Verlassen des Adsorberbetts gekühlt wird und in einem zweiten Schritt iib) bzw. ivb) der Chlorwasserstoff-Kreisgasstrom nur noch gekühlt wird, wobei in dem Kondensator und Phasenabscheider flüssiger, im Wesentlichen phosgenfreier Chlorkohlenwasserstoff gewonnen wird.

4. Verfahren nach Anspruch 3, **dadurch gekennzeichnet, dass** in den Regenerierschritten ii) und/oder iv) das Kreisgas in - bezogen auf den Adsorptionsschritt i) bzw. iii) - umgekehrter Richtung über das Adsorberbett geleitet wird und zwischen den Schritten iia) und iib) bzw. iva) und ivb) die Richtung des Kreisgasstroms erneut umgekehrt wird.

5. Verfahren nach Anspruch 1, **dadurch gekennzeichnet, dass** in den Regenerierschritten ii) und/oder iv) zumindest ein Teilstrom des Frisch-Chlorwasserstoffstroms abgezweigt, erhitzt, durch das zu regenerierende Adsorberbett geleitet und anschließend durch einen Kondensator und einen Phasenabscheider geleitet wird, wobei flüssiger, im Wesentlichen phosgenfreier (Chlor)kohlenwasserstoff gewonnen wird, und anschließend - gegebenenfalls nach Vereinigung dieses Teilstroms mit dem Hauptstrom des Frisch-Chlorwasserstoffs - durch den jeweils anderen, im Adsorptionsbetrieb befindlichen Adsorber geleitet wird.

6. Verfahren nach Anspruch 5, **dadurch gekennzeichnet, dass** in einem ersten Schritt iia) bzw. iva) der Teilstrom vor Eintritt in das Adsorberbett erhitzt und nach Verlassen des Adsorberbetts gekühlt wird und in einem zweiten Schritt iib) bzw. ivb) der Teilstrom nicht mehr erhitzt wird, wobei in Kondensator und Phasenabscheider flüssiger, im Wesentlichen phosgenfreier (Chlor)kohlenwasserstoff gewonnen wird.

7. Verfahren zur Herstellung von Chlor aus Chlorwasserstoff, welches Chlorkohlenwasserstoffe und Phosgen enthält, mit den Schritten:
a) Reinigung eines Chlorwasserstoff, (Chlor)kohlenwasserstoffe und Phosgen enthaltenden Stroms a nach dem Verfahren gemäß einem der Ansprüche 1 bis 6 unter Gewinnung von phosgenfreien Chlorkohlenwasserstoffen und einem im Wesentlichen von Chlorkohlenwasserstoffen freien Chlorwasserstoff enthaltenden Einsatzgasstroms b1,
b) Einspeisung des Chlorwasserstoff enthaltenden Stroms b1 und eines Sauerstoff enthaltenden Stroms b2 in eine Oxidationszone und katalytische Oxidation von Chlorwasserstoff zu Chlor, wobei ein Produktgasstrom b3 enthaltend Chlor, Chlorwasserstoff, Wasser, Sauerstoff, Kohlendioxid und Inertgase erhalten wird;
c) Inkontaktbringen des Produktgasstroms b3 in einem Phasenkontaktapparat mit wässriger Salzsäure I und teilweise Abtrennung von Wasser und von Chlorwasserstoff aus dem Strom b3, wobei ein Gasstrom c enthaltend Chlorwasserstoff, Chlor, Wasser, Sauerstoff, Kohlendioxid und gegebenenfalls Inertgase verbleibt, wobei mindestens 5 % des in dem Strom b3 enthaltenen Chlorwasserstoffs in dem Gasstrom c verbleibt;
d) Trocknung des Gasstroms c, wobei ein im Wesentlichen wasserfreier Gasstrom d enthaltend Chlorwasserstoff, Chlor, Sauerstoff, Kohlendioxid und gegebenenfalls Inertgase verbleibt;
e) teilweise Verflüssigung des Gasstroms d durch Verdichtung und Abkühlung, wobei ein zumindest teilweise verflüssigter Strom e erhalten wird;
f) Gas/Flüssig-Trennung des Stroms e in einen Gasstrom f1 enthaltend Chlor, Sauerstoff, Kohlendioxid und gegebenenfalls Inertgase und in einen Flüssigkeitsstrom f2 enthaltend Chlorwasserstoff, Chlor, Sauerstoff und Kohlendioxid und gegebenenfalls Rückführung zumindest eines Teils des Gasstroms f1 in Schritt b);
g) Trennung des Flüssigstroms f2 durch Destillation in einer Kolonne in einen Chlorstrom g1 und einen im Wesentlichen aus Chlorwasserstoff, Sauerstoff und Kohlendioxid bestehenden Strom g2, wobei ein Teil des Chlorwasserstoffs am Kolonnenkopf kondensiert und als Rücklauf in die Kolonne zurückläuft, wodurch ein Strom g2 mit einem Chlorgehalt < 1 Gew.-% gewonnen wird.

## Claims

1. A process for recovering (chloro)hydrocarbon-free hydrogen chloride and phosgene-free (chloro)hydrocarbons from a hydrogen chloride stream comprising (chloro)hydrocarbons and phosgene, which comprises
i) in a first step, connecting a first adsorber and a second adsorber in series and passing the fresh hydrogen chloride stream comprising phosgene and (chloro)hydrocarbons firstly through the first adsorber and subsequently through the second adsorber until essentially no more (chloro)hydrocarbon is adsorbed by the first adsorber,
ii) in a second step, passing the fresh hydrogen chloride stream through the second adsorber while the first adsorber is regenerated, with essentially phosgene-free (chloro)hydrocarbon being obtained in the regeneration,
iii) in a third step, passing the fresh hydrogen chloride stream firstly through the second adsorber and subsequently through the regenerated first adsorber until essentially no more (chloro)hydrocarbon is adsorbed by the second adsorber,
iv) in a fourth step, passing the fresh hydrogen chloride stream through the first adsorber while the second adsorber is regenerated, with essentially phosgene-free (chloro)hydrocarbon being obtained in the regeneration,
with the steps i) to iv) being able to be carried out one or more times in succession.

2. The process according to claim 1, wherein the hydrogen chloride comprised in the respective adsorber is passed as circulating gas in a closed circuit comprising a compressor, a heater, a condenser and a phase separator over the adsorber bed in the regeneration steps ii) and/or iv), with the circulating hydrogen chloride gas stream being heated before it enters the adsorber bed and being cooled after it leaves the adsorber bed, with liquid, essentially phosgene-free (chloro) hydrocarbon being obtained in the condenser and phase separator.

3. The process according to claim 2, wherein the circulating hydrogen chloride gas stream is heated before it enters the adsorber bed and is cooled after it leaves the adsorber bed in a first step iia) or iva) and the circulating hydrogen chloride gas stream is only cooled in a second step iib) or ivb), with liquid, essentially phosgene-free chlorohydrocarbon being obtained in the condenser and phase separator.

4. The process according to claim 3, wherein, in the regeneration steps ii) and/or iv), the circulating gas is passed over the adsorber bed in the opposite direction compared to the adsorption step i) or iii) and the direction of the circulating gas steam is reversed again between the steps iia) and iib) or iva) and ivb).

5. The process according to claim 1, wherein, in the regeneration steps ii) and/or iv), at least a substream of the fresh hydrogen chloride stream is branched off, heated, passed through the adsorber bed to be regenerated and subsequently through a condenser and a phase separator, with liquid, essentially phosgene-free (chloro)hydrocarbon being obtained, and subsequently, if appropriate after combining this substream with the main stream of the fresh hydrogen chloride, passed through the other adsorber which is in adsorption operation.

6. The process according to claim 5, wherein the substream is heated before it enters the adsorber bed and is cooled after it leaves the adsorber bed in a first step iia) or iva) and the substream is no longer heated in a second step iib) or ivb), with liquid, essentially phosgene-free (chloro)hydrocarbon being obtained in the condenser and phase separator.

7. A process for preparing chlorine from hydrogen chloride comprising chlorohydrocarbons and phosgene, which comprises the steps:
a) purification of a stream a comprising hydrogen chloride, (chloro)hydrocarbons and phosgene by the process according to any of claims 1 to 6 to give phosgene-free chlorohydrocarbons and an essentially chlorohydrocarbon-free, HCl-comprising feed gas stream b1;
b) introduction of the HCl-comprising stream b1. and an oxygen-comprising stream b2 into an oxidation zone and catalytic oxidation of hydrogen chloride to chlorine to give a product gas stream b3 comprising chlorine, hydrogen chloride, water, oxygen, carbon dioxide and inert gases;
c) contacting of the product gas stream b3 with aqueous hydrochloric acid I in a phase contact apparatus and partial removal of water and hydrogen chloride from the stream b3 to leave a gas stream c comprising hydrogen chloride, chlorine, water, oxygen, carbon dioxide and possibly inert gases, with at least 5% of the hydrogen chloride comprised in the stream b3 remaining in the gas stream c;
d) drying of the gas stream c to leave an essentially water-free gas stream d comprising hydrogen chloride, chlorine, oxygen, carbon dioxide and possibly inert gases;
e) partial liquefaction of the gas stream d by compression and cooling to give an at least partially liquefied stream e;
f) gas/liquid separation of the stream e to give a gas stream f1 comprising chlorine, oxygen, carbon dioxide and possibly inert gases and a liquid stream f2 comprising hydrogen chloride, chlorine, oxygen and carbon dioxide and, if appropriate, recirculation of at least part of the gas stream f1 to step b);
g) separation of the liquid stream f2 by distillation in a column to give a chlorine stream g1 and a stream g2 consisting essentially of hydrogen chloride, oxygen and carbon dioxide, with part of the hydrogen chloride condensing at the top of the column and running back as runback into the column, as a result of which a stream g2 having a chlorine content of < 1% by weight is obtained.

## Revendications

1. Procédé pour la production de chlorure d'hydrogène exempt d'hydrocarbures (chlorés) et d'hydrocarbures (chlorés) exempts de phosgène à partir d'un flux de chlorure d'hydrogène contenant des hydrocarbures (chlorés) et du phosgène, dans lequel
i) dans une première étape, on commute en série un premier adsorbant et un deuxième adsorbant et le flux de chlorure d'hydrogène frais contenant le phosgène et les hydrocarbures (chlorés) est d'abord guidé dans le premier puis dans le deuxième adsorbant, jusqu'à ce que le premier adsorbant n'adsorbe essentiellement plus d'hydrocarbure (chloré),
ii) dans une deuxième étape, le flux de chlorure d'hydrogène frais est guidé dans le deuxième adsorbant, pendant que le premier adsorbant est régénéré, un hydrocarbure (chloré) essentiellement exempt de phosgène étant formé lors de la régénérescence,
iii) dans une troisième étape, on guide le flux de chlorure d'hydrogène frais d'abord dans le deuxième puis dans le premier adsorbant régénéré, jusqu'à ce que le deuxième adsorbant n'adsorbe essentiellement plus d'hydrocarbure (chloré),
iv) dans une quatrième étape, le flux de chlorure d'hydrogène frais est guidé dans le premier adsorbant, pendant que le deuxième adsorbant est régénéré, un hydrocarbure (chloré) essentiellement exempt de phosgène étant formé lors de la régénérescence,
les étapes i) à iv) pouvant être réalisées une ou plusieurs fois les unes après les autres.

2. Procédé selon la revendication 1, **caractérisé en ce que** lors des étapes de régénérescence ii) et/ou iv), le chlorure d'hydrogène contenu dans chaque adsorbant est guidé dans un circuit fermé, comprenant un compresseur, un chauffage, un condensateur et un séparateur de phases, comme gaz de circulation, sur le 1it d'adsorbant, le flux de gaz de circulation de chlorure d'hydrogène étant chauffé avant son entrée dans le lit d'adsorbant et refroidi après avoir quitté le lit d'adsorbant, un hydrocarbure (chloré) liquide, essentiellement exempt de phosgène étant obtenu dans le condensateur et le séparateur de phases.

3. Procédé selon la revendication 2, **caractérisé en ce que** dans une première étape iia) ou iva), le flux de gaz de circulation de chlorure d'hydrogène est chauffé avant son entrée dans le lit d'adsorbant et refroidi après avoir quitté le lit d'adsorbant et, dans une deuxième étape iib) ou ivb), le flux de gaz de circulation de chlorure d'hydrogène n'est plus que refroidi, en obtenant, dans le condensateur et le séparateur de phases, un hydrocarbure chloré liquide, essentiellement exempt de phosgène.

4. Procédé selon la revendication 3, **caractérisé en ce que** dans les étapes de régénérescence ii) et/ou iv) le gaz de circulation est guidé dans le sens opposé
- par rapport à l'étape d'adsorption i) ou iii) - sur le lit d'adsorbant et le sens du flux de gaz de circulation est à nouveau inversé entre les étapes iia) et iib) ou iva) et ivb).

5. Procédé selon la revendication 1, **caractérisé en ce que** dans les étapes de régénérescence ii) et/ou iv), au moins un flux partiel du flux de chlorure d'hydrogène frais est dévié, chauffé, guidé dans le lit d'adsorbant à régénérer, puis dans un condensateur et un séparateur de phases, où un hydrocarbure (chloré) liquide essentiellement exempt de phosgène est obtenu, puis - le cas échéant après réunion de ce flux partiel avec le flux principal du chlorure d'hydrogène frais - il est guidé dans à chaque fois l'autre adsorbant se trouvant en fonctionnement d'adsorption.

6. Procédé selon la revendication 5, **caractérisé en ce que** dans une première étape iia) ou iva), le flux partiel est chauffé avant son entrée dans le lit d'adsorbant et refroidi après avoir quitté le lit d'adsorbant et, dans une deuxième étape iib) ou ivb), le flux partiel n'est plus chauffé, en obtenant, dans le condensateur et le séparateur de phases un hydrocarbure (chloré) liquide, essentiellement exempt de phosgène.

7. Procédé pour la préparation de chlore à partir de chlorure d'hydrogène qui contient des hydrocarbures chlorés et du phosgène, présentant les étapes suivantes:
a) purification d'un flux a contenant du chlorure d'hydrogène, des hydrocarbures (chlorés) et du phosgène selon le procédé selon l'une quelconque des revendications 1 à 6 avec obtention d'hydrocarbures chlorés exempts de phosgène et d'un flux de gaz d'utilisation b1 essentiellement exempt d'hydrocarbures chlorés, contenant du chlorure d'hydrogène,
b) injection du flux b1 contenant du chlorure d'hydrogène et d'un flux b2 contenant de l'oxygène dans une zone d'oxydation et oxydation catalytique de chlorure d'hydrogène en chlore, avec obtention d'un flux gazeux de produits b3, contenant du chlore, du chlorure d'hydrogène, de l'eau, de l'oxygène, du dioxyde de carbone et des gaz inertes ;
c) mise en contact du flux gazeux de produits b3 dans un appareil de mise en contact de phases avec de l'acide chlorhydrique aqueux I et séparation partielle de l'eau et de chlorure d'hydrogène du flux b3, un flux gazeux c contenant du chlorure d'hydrogène, du chlore, de l'eau, de l'oxygène, du dioxyde de carbone et le cas échéant des gaz inertes restant, au moins 5% du chlorure d'hydrogène contenu dans le flux b3 restant dans le flux gazeux c ;
d) séchage du flux gazeux c, un flux gazeux d essentiellement exempt d'eau, contenant du chlorure d'hydrogène, du chlore, de l'oxygène, du dioxyde de carbone et le cas échéant des gaz inertes restant ;
e) liquéfaction partielle du flux gazeux d par compression et refroidissement, avec obtention d'un flux e au moins partiellement liquéfié ;
f) séparation gaz/liquide du flux e en un flux gazeux f1 contenant du chlore, de l'oxygène, du dioxyde de carbone et le cas échéant des gaz inertes et en un flux liquide f2 contenant du chlorure d'hydrogène, du chlore, de l'oxygène et du dioxyde de carbone et le cas échéant recyclage d'au moins une partie du flux gazeux f1 dans l'étape b) ;
g) séparation du flux liquide f2 par distillation dans une colonne en un flux de chlore g1 et un flux g2 constitué essentiellement par du chlorure d'hydrogène, de l'oxygène et du dioxyde de carbone, une partie du chlorure d'hydrogène condensant en tête de colonne et revenant comme reflux dans la colonne, suite à quoi on obtient un flux g2 présentant une teneur en chlore < 1% en poids.
